# EUROPEAN PATENT SPECIFICATION

(11) **EP 3 843 538 B1**
(45) Date of publication and mention of the grant of the patent: **05.07.2023**
(21) Application number: 19867012.7
(22) Date of filing: 25.09.2019
(51) Int. Cl.: A01K 27/00, A63B 65/12, A01K 15/02, F41B 3/04

(54) **A PET ACCESSORY**
HAUSTIERZUBEHÖR
ACCESSOIRE POUR ANIMAUX DE COMPAGNIE

(30) Priority: 25.09.2018 AU 2018903590
(43) Date of publication of application: 07.07.2021
(73) Proprietor: Ashlin, Mark Keith, Applecross, WA 6153 (AU)
(72) Inventor: ASHLIN, Mark Keith, Applecross, WA 6153 (AU); EADIE, James, Applecross, WA 6153 (AU)
(74) Representative: Sach, Greg Robert
(86) International application number: PCT/AU2019/051027
(87) International publication number: WO 2020/061625

(56) References cited:
- WO-A1-00/55563
- US-A- 2 644 441
- US-A- 4 131 102
- US-A1- 2008 072 886
- US-A1- 2010 078 003

## Description

### TECHNICAL FIELD

This invention relates to the field of keeping pets, in general, and more specifically to a pet accessory, typically an accessory and toy for a dog.

### BACKGROUND ART

The following discussion of the background art is intended to facilitate an understanding of the present invention only. The discussion is not an acknowledgement or admission that any of the material referred to is or was part of the common general knowledge as at the priority date of the application.

A pet or companion animal is an animal kept primarily for company, protection, or entertainment rather than as a working animal, livestock, or laboratory animal. Pets provide their owners both physical and emotional benefits. For example, walking a dog can supply both the human and pet with exercise, fresh air, and social interaction.

Pets can give companionship to elderly adults who do not have adequate social interaction with other people, as well as to other people who are living alone. There is a medically approved class of therapy animals, mostly dogs or cats, that are brought to visit confined humans, such as children in hospitals or the elderly in nursing homes. Pet therapy utilises trained animals and handlers to achieve specific physical, social, cognitive, and emotional goals with patients. Some of the most popular pets are likely dogs and cats, but other animals are also kept as pets, such as birds, reptiles, etc. The archaeological record shows the first undisputed dog remains buried beside humans dated around 14,700 years ago, with disputed remains occurring around 36,000 years ago. Accordingly, a large number of people keep dogs as pets worldwide.

Studies have shown that there are health benefits to keeping a pet. For example, when in the presence of a pet dog, people show reductions in cardiovascular, behavioural, and psychological indicators of anxiety. Other health benefits are gained from exposure to immune-stimulating microorganisms, which, according to the so-called hygiene hypothesis, can protect against allergies and autoimmune diseases. The benefits of contact with, for example, a dog also include social support, as dogs are able to not only provide companionship and social support themselves, but also to act as facilitators of social interactions between humans.

The practice of using dogs and other animals as a part of therapy dates back to the late 18th century, when animals were introduced into mental institutions to help socialize patients with mental disorders. Animal-assisted intervention research has shown that animal-assisted therapy with a dog can increase social behaviours, such as smiling and laughing, among people with Alzheimer's disease. One study demonstrated that children with ADHD and conduct disorders who participated in an education program with dogs and other animals showed increased attendance, increased knowledge and skill objectives, and decreased antisocial and violent behaviour compared with those who were not in an animal-assisted program.

As such, an important aspect to keeping a pet, such as a dog or cat, is beneficial interaction therewith. Numerous games or means to interact with and entertain both pets and owners have been developed during human history.

For example, many dogs are natural retrievers that enjoy retrieving objects such as sticks or balls. Unfortunately, the stick or ball is typically thrown at great distances for long periods of time which often makes a person's back and arm tired before the animal is ready to rest. To address this problem, ball-throwing apparatus has been developed, such as disclosed in U.S. Pat. No. 6,076,829**.** One shortcoming with such prior art devices is that they are bulky, cumbersome and serve no other purpose than throwing a ball, requiring a pet owner to carry such apparatus around with them when they are needed. WO 00/55563 A1 discloses a catapult with a receptacle for an object, for example, a ball to be thrown and fetched by a dog, which is suitable also as a dog leash.

US 2008/072886 A1 discloses a ball throwing device that can be attached to a dog leash.

Applicant has devised the following invention which facilitates interaction, exercise and entertainment of pets, especially dogs, in a manner which is beneficial to both pet and owner and in amelioration of the shortcomings in the art of ball-throwing apparatus.

### SUMMARY OF THE INVENTION

It is to be appreciated by the skilled addressee that reference herein to a 'pet' generally includes reference to a dog, but the invention is not limited solely to dogs and is useable by other pet animals, e.g. cats, ferrets, or any other animals where there is a want or need for throwing an object for the entertainment and/or exercise of such animal.

According to a first aspect of the invention there is provided a pet accessory as set out in claim 1.

The skilled addressee will appreciate that by the cradle being slidably arranged on the leash allows the cradle to be moved to either the proximal or distal ends of the leash in order to function as a ball carrier when the accessory is used as a leash. The cradle is similarly moveable to a central portion of the leash, as required, when the leash is used as a sling.

Typically, the distal end is configurable to engage an animal by including a leash clip.

In one embodiment, the distal end is configurable to engage an animal by defining an aperture for fitment around a neck of an animal.

Typically, the finger loop is shaped and dimensioned to operatively receive a finger of a user therein in order to secure the accessory to a user's hand to facilitate casting the ball as a sling.

Typically, the finger loop is positioned on the leash so that the leash clip lies and is comfortably graspable in a palm of a user's hand whilst a finger on said hand is received by the finger loop.

Typically, the handle comprises a wrist loop through which a wrist of a user is operatively passable.

Typically, the handle is shaped and dimensioned to be comfortably graspable by a thumb of the user whilst the leash clip lies and is comfortably graspable in a palm of a user's hand whilst an index finger on said hand is received by the finger loop in order to facilitate useability as a sling.

According to the invention, the cradle is manufactured from a polymer and/or rubber material.

According to the invention, the cradle is shaped and dimensioned to provide an interference fit to a conventional ball, such as a tennis ball, a squash ball, etc.

Typically, the cradle is shaped and dimensioned to provide an interference fit to a plurality of conventional balls, such as a tennis ball, a squash ball, a golf ball, etc.

Typically, the outer periphery of the cradle defines at least two slits therein so that the leash is slidably receivable therethrough.

Typically, the leash includes a stopper configured to retain the cradle at a certain position along a length of the leash. The stopper may be adjustable.

Typically, the leash includes a securing means, such as a suitable strap, configured to secure the ball in the cradle.

In one embodiment, the securing means includes interference fit fasteners whereby the securing means is fixable to the leash to either retain the ball in the cradle, or to secure the securing means out of the way when the leash is used as a sling. Such interference fit fasteners may include press studs, buttons, hook and loop fasteners, or the like.

The skilled addressee will appreciate that such a cradle is retrofittable to an existing leash, as described herein.

### BRIEF DESCRIPTION OF THE DRAWINGS

The description will be made with reference to the accompanying drawings in which:

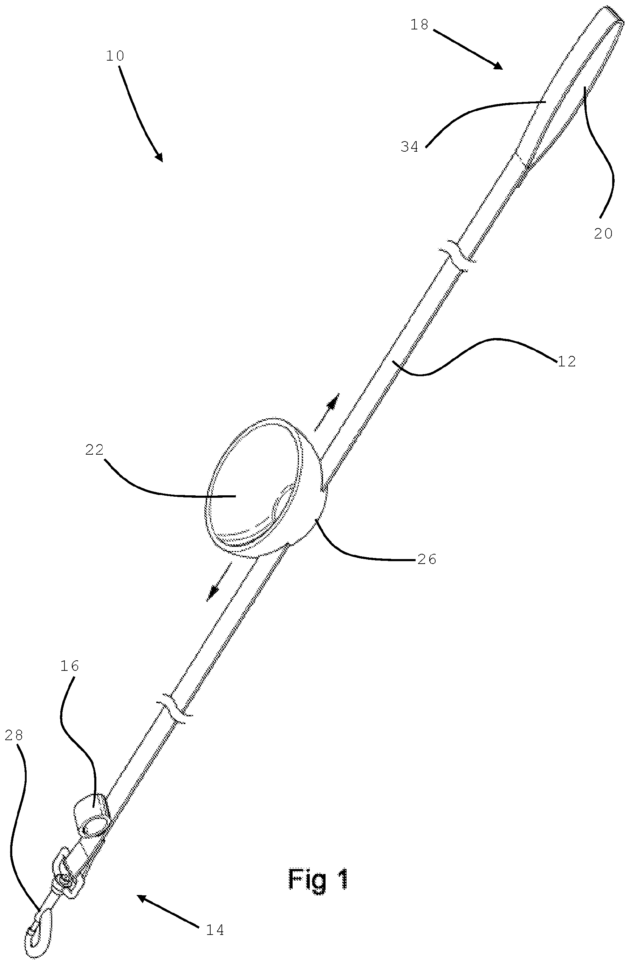

**Figure 1** is a perspective view diagrammatic representation of one embodiment of a pet accessory in accordance with an aspect of the present invention;
**Figure 2** is a perspective view diagrammatic representation of the pet accessory of Figure 1 showing the leash folded about a periphery of the cradle to engage a ball;

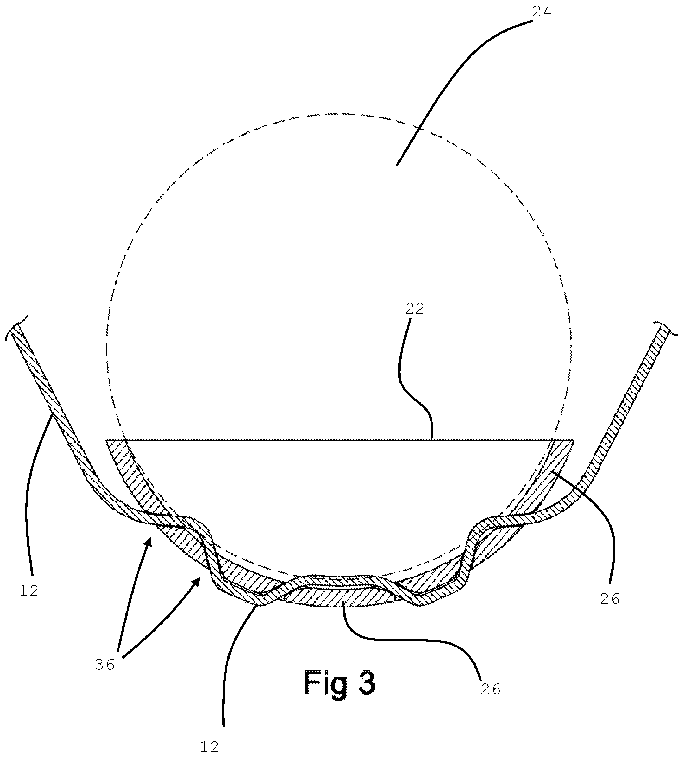

**Figure 3** is a close-up side sectional diagrammatic representation of the cradle showing the leash slidably received through the outer periphery thereof;

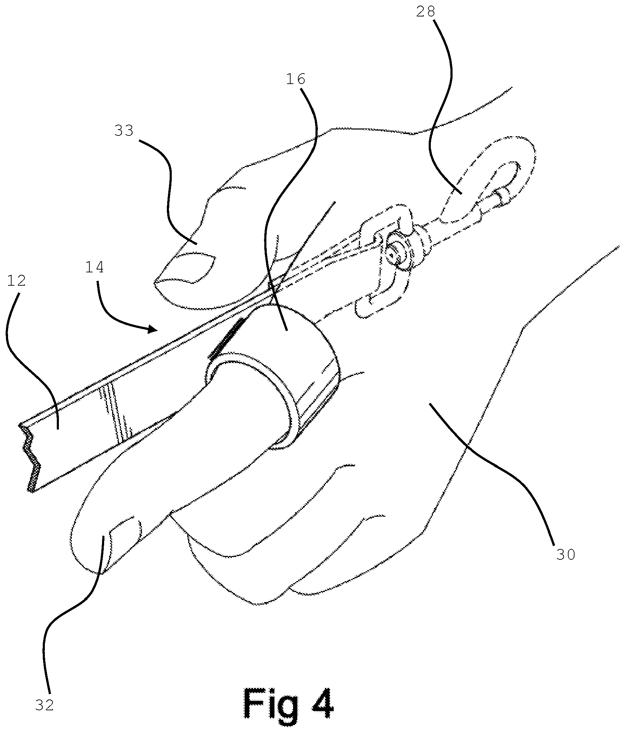

**Figure 4** is a perspective view diagrammatic representation of a user's hand showing the leash clip lying in a palm thereof whilst a finger is received by the finger loop;
**Figure 5** is a perspective view diagrammatic representation of another embodiment of a pet accessory, in accordance with an aspect of the present invention, having a securing means and stopper;
**Figure 6** is a perspective view diagrammatic representation of the pet accessory of Figure 5 showing the securing means and stopper in use;
**Figure 7** is a close-up side sectional diagrammatic representation of the cradle of the embodiment of Figure 5 showing the leash slidably received through the outer periphery thereof;
**Figures 8A and 8B** are perspective view diagrammatic representations of another embodiment of a pet accessory, in accordance with an aspect of the present invention, having a securing means; and
**Figures 9A and 9B** are perspective view diagrammatic representations of a stopper for the pet accessory.

### DETAILED DESCRIPTION OF EMBODIMENTS

Further features of the present invention are more fully described in the following description of several nonlimiting embodiments thereof. This description is included solely for the purposes of exemplifying the present invention to the skilled addressee. It should not be understood as a restriction on the broad summary, disclosure or description of the invention as set out above. In the figures, incorporated to illustrate features of the example embodiment or embodiments, like reference numerals are used to identify like parts throughout.

Referring now to the accompanying drawings, there is shown one possible embodiment of a pet accessory 10 comprising a leash 12 and a cradle 22. The leash 12 has a distal end 14 configurable to engage an animal, like a dog, and further defining a finger loop 16, as shown. The leash 12 also has a proximal end 18 defining a handle 20.

The accessory 10 includes the elastic resiliently deformable cradle 22 which is shaped and configured for operatively receiving a ball 24 therein. The cradle 22 is further configured so that the leash 12 is slidably receivable through at least a portion of an outer periphery 26 thereof, so that folding the leash 12 about said periphery 26 engages the ball 24 in the cradle 22, wherein the accessory 10 is useable to lead an animal and as a sling to cast the ball 24, described below.

The skilled addressee will appreciate that by the cradle 22 being slidably arranged on the leash 12 allows the cradle 22 to be moved to either the proximal 18 or distal 14 ends of the leash 12 in order to function as a ball carrier when the accessory 10 is used as a leash. The cradle 22 is similarly moveable to a central portion of the leash 12, as required, when the leash is used as a sling.

The distal end 14 is typically configurable to engage an animal by including a leash clip 28. In another embodiment, the distal end 14 may be configurable to engage an animal by defining an aperture for fitment around a neck of an animal, or the like.

The finger loop 16 is typically shaped and dimensioned to operatively receive a finger of a user therein in order to secure the accessory 10 to a user's hand 30 to facilitate casting the ball 24 as a sling. The finger loop 16 is generally positioned on the leash 12 so that the leash clip 28 lies and is comfortably graspable in a palm of a user's hand 30 whilst a finger, typically an index finger 32, of said hand 30 is received by the finger loop 16.

In the exemplified embodiment, the handle 20 comprises a wrist loop 34 through which a wrist of a user is operatively passable. The handle 20 is generally shaped and dimensioned to be comfortably graspable by a thumb 33 of the user whilst the leash clip 28 lies and is comfortably graspable in a palm of a user's hand 30 whilst an index finger 32 of said hand 30 is received by the finger loop 16 in order to facilitate useability as a sling.

The cradle 22 is manufactured from a polymer and/or rubber material. The cradle 22 is shaped and dimensioned to provide an interference fit to a conventional ball, such as a tennis ball, a squash ball, etc. The skilled addressee will appreciate that the cradle 22 may be shaped and dimensioned to provide an interference fit to a plurality of conventional balls, such as a tennis ball, a squash ball, a golf ball, etc.

The outer periphery 26 of the cradle 22 generally defines at least two slits 36 therein so that the leash 12 is slidably receivable therethrough. However, other versions and configurations are possible and within the scope of the present invention.

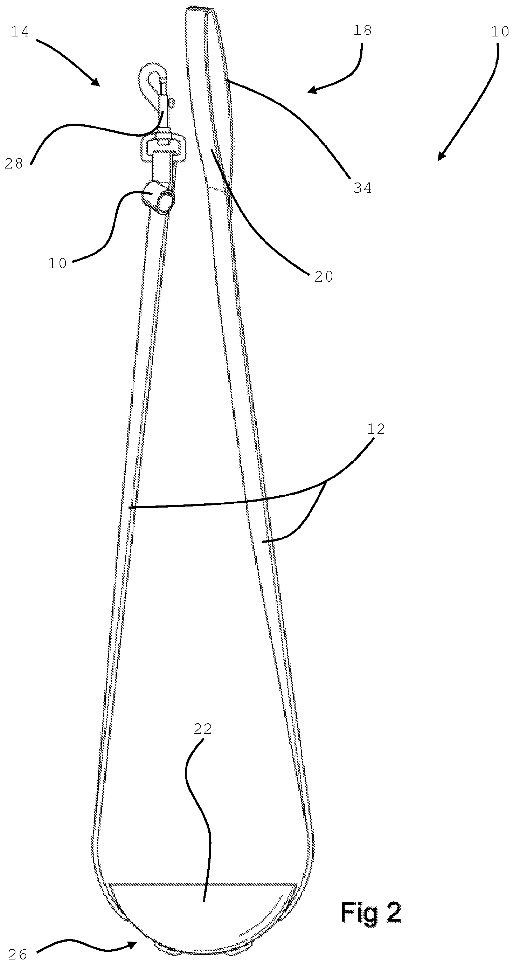

In general use, the accessory 10 is able to function as a conventional lead or leash to lead an animal. When used as a sling, the cradle 22 is moved to a middle of two lengths of the leash 12, as shown in Figure 2. The index finger 32 is placed through the finger loop 16 on the distal end 14 and the handle 20 at the proximal end 18 is grasped between the thumb 33 and index finger 32. In this arrangement, the accessory 10 is swung in an arc, and the handle 20 released at a precise moment. This frees the ball to fly away or be cast to a target area, or the like. The sling essentially works by extending the length of a human arm, thus allowing the ball 24 to be thrown much farther than it generally could be by hand 30 alone.

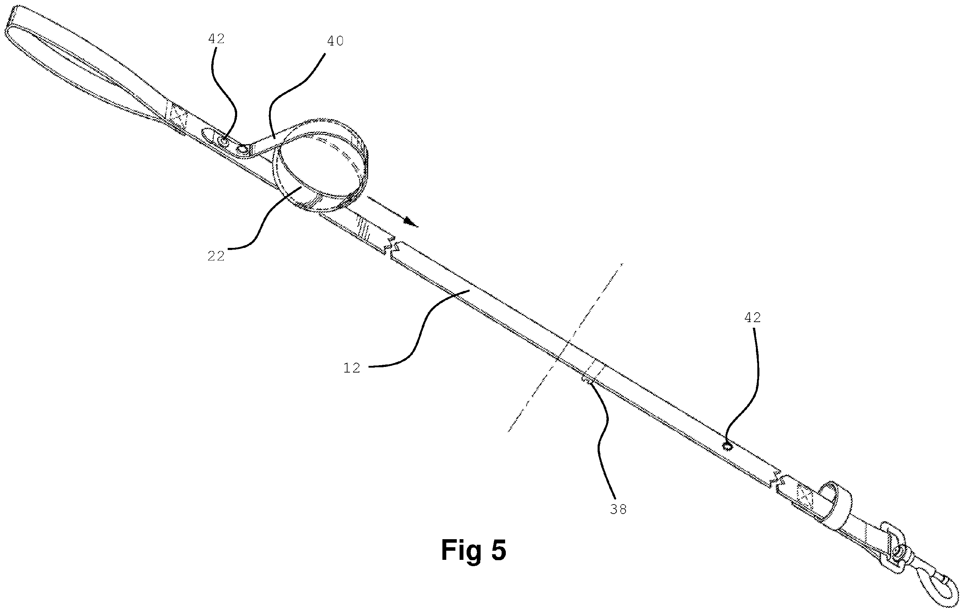

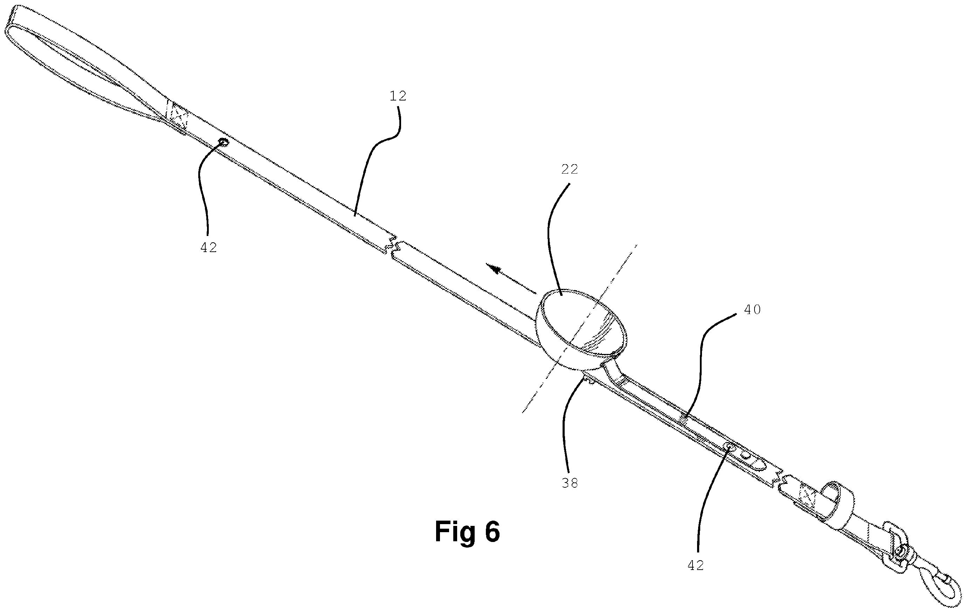

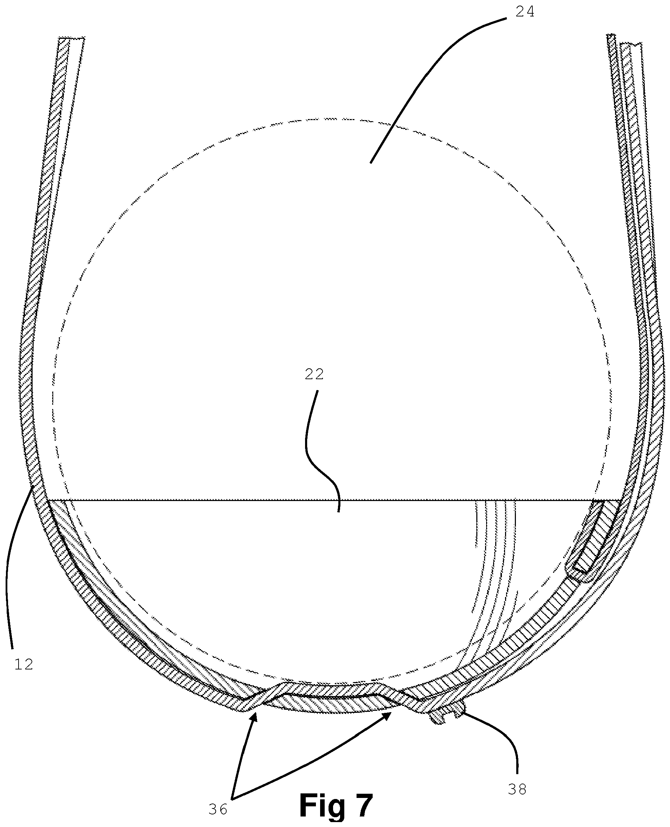

Referring now to Figures 5 to 9 of the accompanying drawings, there is shown a further embodiment of the accessory 10 wherein the leash 12 includes a stopper 38 configured to retain the cradle 22 at a certain position along a length of the leash 12. The stopper 38 is typically adjustable and used to retain the cradle at a midpoint of the leash to facilitate use as a sling when the cradle is not stored proximate the handle 20 or the distal end 14 of the leash 12.

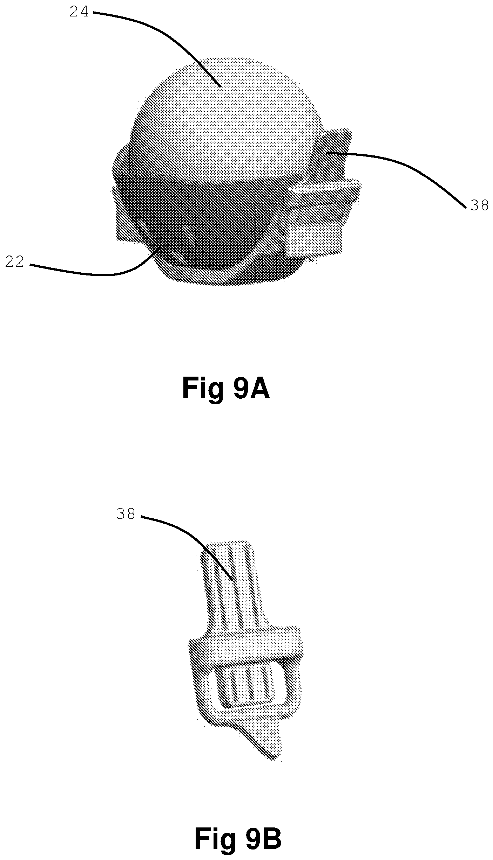

In the embodiment shown in Figures 9, the stopper 38 comprises a clip to prevent the cradle 22 from traveling both up or down the leash 12 when used as a sling. The clip 38 is generally sewn or fixable along the leash 12 and is attachable to the outside of the cradle from the finger loop side. When used as a leash for walking a dog, the clip 38 can be released from the cradle 22 allowing said cradle 22 to be slid towards the handle, or the like.

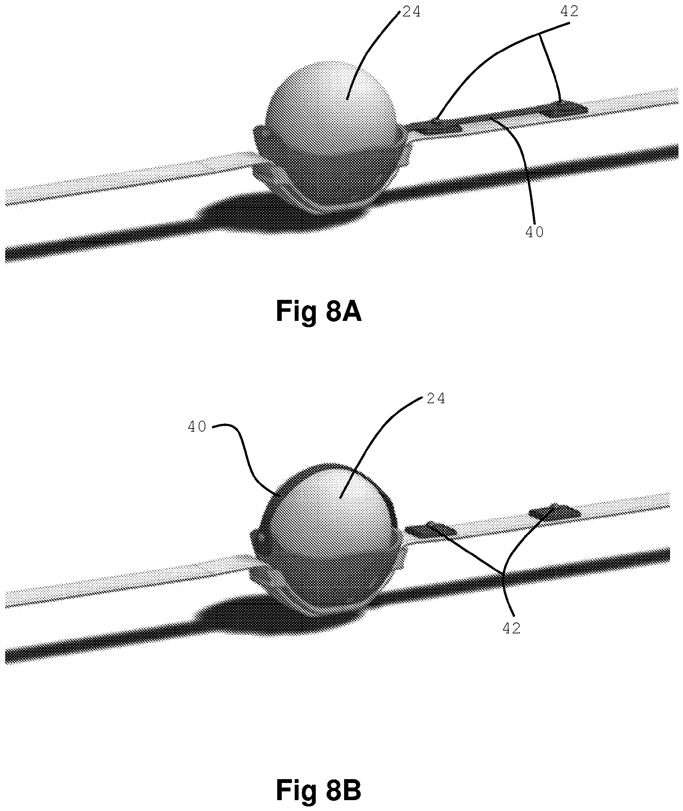

In addition, in this embodiment, the leash 12 includes a securing means 40, such as a suitable strap, which is configured to secure the ball 24 in the cradle 22, as shown. In one embodiment, the securing means 40 includes interference fit fasteners 42 whereby the securing means 40 is fixable to the leash 12 to either retain the ball 24 in the cradle 22, or to secure the securing means 40 out of the way when the leash 12 is used as a sling, as described above. Such interference fit fasteners 42 may include press studs, buttons, hook and loop fasteners, or the like. Figures 8 show another embodiment of such securing means 40 and the skilled addressee is to appreciate that variations hereon are possible and within the scope of the present invention.

Applicant believes is particularly advantageous that the present invention provides for accessory 10 which enables use as a leash and ball carrier, whilst also useable as a ball sling in order to entertain and play with an animal, such as a dog.

The use of the terms "a", "an", "said", "the", and/or similar referents in the context of describing various embodiments (especially in the context of the claimed subject matter) are to be construed to cover both the singular and the plural, unless otherwise indicated herein or clearly contradicted by context. The terms "comprising," "having," "including," and "containing" are to be construed as openended terms (i.e., meaning "including, but not limited to,") unless otherwise noted. As used herein, the term "and/or" includes any and all combinations of one or more of the associated listed items. No language in the specification should be construed as indicating any non-claimed subject matter as essential to the practice of the claimed subject matter.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

It is to be appreciated that reference to "one example" or "an example" of the invention, or similar exemplary language (e.g., "such as") herein, is not made in an exclusive sense. Various substantially and specifically practical and useful exemplary embodiments of the claimed subject matter are described herein, textually and/or graphically, for carrying out the claimed subject matter.

Accordingly, one example may exemplify certain aspects of the invention, whilst other aspects are exemplified in a different example. These examples are intended to assist the skilled person in performing the invention and are not intended to limit the overall scope of the invention in any way unless the context clearly indicates otherwise. Variations (e.g. modifications and/or enhancements) of one or more embodiments described herein might become apparent to those of ordinary skill in the art upon reading this application. The inventor(s) expects skilled artisans to employ such variations as appropriate, and the inventor(s) intends for the claimed subject matter to be practiced other than as specifically described herein.

Any method steps, processes, and operations described herein are not to be construed as necessarily requiring their performance in the particular order discussed or illustrated, unless specifically identified as an order of performance. It is also to be understood that additional or alternative steps may be employed.

## Claims

1. A pet accessory (10) comprising:
a leash (12) having a distal end (14) configurable to engage an animal, a proximal end (18) defining a handle (20); and
a cradle (22) shaped and configured for operatively receiving a ball therein,
wherein the cradle is shaped and dimensioned to provide an interference fit to the ball, wherein the accessory is useable to lead an animal and as a slide to cast the ball, **characterized in that**
the distal end of the leash further defines a finger loop (16), and **in that**
the cradle is an elastic resiliently deformable cradle manufactured from a polymer and/or rubber material,
said cradle further configured so that the leash is slidably receivable through at least a portion of an outer periphery (26) thereof so that folding the leash about said periphery engages the ball in the cradle, wherein the accessory is useable to lead an animal and as a sling to cast the ball.

2. The accessory of claim 1, wherein the distal end is configurable to engage an animal by including a leash clip (28) .

3. The accessory of either of claims 1 or 2, wherein the distal end is configurable to engage an animal by defining an aperture for fitment around a neck of an animal.

4. The accessory of any of claims 1 to 3, wherein the finger loop is shaped and dimensioned to operatively receive a finger of a user therein in order to secure the accessory to a user's hand to facilitate casting the ball as a sling.

5. The accessory of claim 2, wherein the finger loop is positioned on the leash so that the leash clip lies and is comfortably graspable in a palm of a user's hand whilst a finger on said hand is received by the finger loop.

6. The accessory of any of claims 1 to 5, wherein the handle comprises a wrist loop (34) through which a wrist of a user is operatively passable.

7. The accessory of claim 2, wherein the handle is shaped and dimensioned to be comfortably graspable by a thumb of the user whilst the leash clip lies and is comfortably graspable in a palm of a user's hand whilst an index finger on said hand is received by the finger loop in order to facilitate useability as a sling.

8. The accessory of any of claims 1 to 7, wherein the cradle is shaped and dimensioned to provide an interference fit to a plurality of types of balls, such as a tennis ball, a squash ball, a golf ball.

9. The accessory of any of claims 1 to 8, wherein the outer periphery of the cradle defines at least two slits (36) therein so that the leash is slidably receivable therethrough.

10. The accessory of any of claims 1 to 9, wherein the leash includes a stopper (38) configured to retain the cradle at a certain position along a length of the leash.

11. The accessory of claim 10, wherein the stopper is adjustable.

12. The accessory of any of claims 1 to 11, wherein the leash includes a securing means (40), such as a suitable strap, configured to secure the ball in the cradle.

13. The accessory of claim 12, wherein the securing means includes interference fit fasteners (42) whereby the securing means is fixable to the leash to either retain the ball in the cradle, or to secure the securing means out of the way when the leash is used as a sling.

## Patentansprüche

1. Haustierzubehör (10), aufweisend:
eine Leine (12) mit einem distalen Ende (14), das dazu eingerichtet ist, ein Tier zu erfassen, einem proximalen Ende (18), das einen Griff (20) bildet, und
eine Wiege (22), die so geformt und eingerichtet ist, dass sie einen Ball operativ aufnehmen kann,
wobei die Wiege so geformt und dimensioniert ist, dass sie eine Presspassung mit dem Ball bildet, wobei das Zubehör zum Führen eines Tieres und als Schleuder zum Werfen des Balles verwendbar ist, **dadurch gekennzeichnet, dass** das distale Ende der Leine ferner eine Fingerschlaufe (16) bildet, und dass die Wiege eine elastische, elastisch verformbare Wiege ist, die aus einem Polymer- und/oder Gummimaterial hergestellt ist, wobei die Wiege ferner so eingerichtet ist, dass die Leine gleitend durch mindestens einen Teil eines äußeren Umfangs (26) davon aufgenommen werden kann, so dass das Falten der Leine um den Umfang den Ball in der Wiege in Eingriff bringt, wobei das Zubehör zum Führen eines Tieres und als Schleuder zum Werfen des Balls verwendet werden kann.

2. Zubehör nach Anspruch 1, wobei das distale Ende so eingerichtet ist, dass es ein Tier erfasst, indem es einen Leinenhalter (28) umfasst.

3. Zubehör nach einem der Ansprüche 1 oder 2, wobei das distale Ende dazu eingerichtet ist, ein Tier zu erfassen, indem es eine Öffnung zum Anbringen um den Hals eines Tieres bildet.

4. Zubehör nach einem der Ansprüche 1 bis 3, wobei die Fingerschlaufe so geformt und dimensioniert ist, dass sie einen Finger eines Benutzers aufnehmen kann, um das Zubehör an der Hand des Benutzers zu befestigen und das Werfen des Balls als Schleuder zu erleichtern.

5. Zubehör nach Anspruch 2, wobei die Fingerschlaufe so an der Leine positioniert ist, dass der Leinenhalter in einer Handfläche eines Benutzers liegt und bequem gegriffen werden kann, während ein Finger der Hand von der Fingerschlaufe aufgenommen wird.

6. Zubehör nach einem der Ansprüche 1 bis 5, wobei der Griff eine Handgelenksschlaufe (34) aufweist, durch die ein Handgelenk eines Benutzers operativ geführt werden kann.

7. Zubehör nach Anspruch 2, wobei der Griff so geformt und dimensioniert ist, dass er von einem Daumen des Benutzers bequem gegriffen werden kann, während der Leinenhalter in einer Handfläche des Benutzers liegt und bequem gegriffen werden kann, während ein Zeigefinger an der Hand von der Fingerschlaufe aufgenommen wird, um die Verwendbarkeit als Schleuder zu erleichtern.

8. Zubehör nach einem der Ansprüche 1 bis 7, wobei die Wiege so geformt und dimensioniert ist, dass sie eine Presspassung für mehrere Arten von Bällen, wie z. B. einen Tennisball, einen Squashball, einen Golfball, bietet.

9. Zubehör nach einem der Ansprüche 1 bis 8, wobei die äußere Peripherie der Wiege mindestens zwei Schlitze (36) aufweist, durch die die Leine gleitend aufgenommen werden kann.

10. Zubehör nach einem der Ansprüche 1 bis 9, wobei die Leine einen Stopper (38) umfasst, der dazu eingerichtet ist, die Wiege in einer bestimmten Position entlang einer Länge der Leine zu halten.

11. Zubehör nach Anspruch 10, wobei der Stopper einstellbar ist.

12. Zubehör nach einem der Ansprüche 1 bis 11, wobei die Leine ein Sicherungsmittel (40), wie z. B. ein geeignetes Band, umfasst, das dazu eingerichtet ist, den Ball in der Wiege zu sichern.

13. Zubehör nach Anspruch 12, wobei das Befestigungsmittel Presspassungsbefestigungen (42) umfasst, wodurch das Befestigungsmittel an der Leine befestigt werden kann, um entweder den Ball in der Wiege zu halten oder um das Befestigungsmittel aus dem Weg zu räumen, wenn die Leine als Schleuder verwendet wird.

## Revendications

1. Accessoire pour animaux de compagnie (10) comprenant :
une laisse (12) ayant une extrémité distale (14) pouvant être configurée pour venir en prise avec un animal, une extrémité proximale (18) définissant une poignée (20) ; et
un berceau (22) façonné et configuré pour recevoir de manière fonctionnelle une balle dans celui-ci,
dans lequel le berceau est façonné et dimensionné pour fournir un ajustement serré sur la balle, dans lequel l'accessoire est utilisable pour mener un animal et en tant que dispositif coulissant pour lancer la balle, **caractérisé en ce que** l'extrémité distale de la laisse définit en outre une boucle de doigt (16), et **en ce que** le berceau est un berceau élastique déformable de manière résiliente fabriqué à partir d'un matériau en polymère et/ou en caoutchouc, ledit berceau en outre configuré de sorte que la laisse peut être reçue de manière coulissante à travers au moins une partie d'une périphérie externe (26) de celui-ci de sorte que le pliage de la laisse autour de ladite périphérie met en prise la balle dans le berceau, dans lequel l'accessoire est utilisable pour mener un animal et en tant qu'élingue pour lancer la balle.

2. Accessoire selon la revendication 1, dans lequel l'extrémité distale peut être configurée pour venir en prise avec un animal en incluant une attache de laisse (28).

3. Accessoire selon les revendications 1 ou 2, dans lequel l'extrémité distale peut être configurée pour venir en prise avec un animal en définissant une ouverture pour un ajustement autour d'un cou d'un animal.

4. Accessoire selon l'une quelconque des revendications 1 à 3, dans lequel la boucle de doigt est façonnée et dimensionnée pour recevoir de manière fonctionnelle un doigt d'un utilisateur dans celle-ci afin de fixer solidement l'accessoire à une main d'utilisateur pour faciliter le lancement de la balle en tant qu'élingue.

5. Accessoire selon la revendication 2, dans lequel la boucle de doigt est positionnée sur la laisse de sorte que l'attache de laisse repose et peut être confortablement saisie dans une paume d'une main d'utilisateur tandis qu'un doigt sur ladite main est reçu par la boucle de doigt.

6. Accessoire selon l'une quelconque des revendications 1 à 5, dans lequel la poignée comprend une boucle de poignet (34) à travers laquelle un poignet d'un utilisateur peut passer de manière fonctionnelle.

7. Accessoire selon la revendication 2, dans lequel la poignée est façonnée et dimensionnée pour pouvoir être confortablement saisie par un pouce de l'utilisateur tandis que l'attache de laisse repose et peut être confortablement saisie dans une paume d'une main d'utilisateur tandis qu'un index sur ladite main est reçu par la boucle de doigt afin de faciliter l'aptitude à l'utilisation en tant qu'élingue.

8. Accessoire selon l'une quelconque des revendications 1 à 7, dans lequel le berceau est façonné et dimensionné pour fournir un ajustement serré à une pluralité de types de balles, telles qu'une balle de tennis, une balle de squash, une balle de golf.

9. Accessoire selon l'une quelconque des revendications 1 à 8, dans lequel la périphérie externe du berceau définit au moins deux fentes (36) dans celui-ci de sorte que la laisse peut être reçue de manière coulissante à travers celles-ci.

10. Accessoire selon l'une quelconque des revendications 1 à 9, dans lequel la laisse comporte une butée (38) configurée pour retenir le berceau au niveau d'une certaine position le long d'une longueur de la laisse.

11. Accessoire selon la revendication 10, dans lequel la butée est ajustable.

12. Accessoire selon l'une quelconque des revendications 1 à 11, dans lequel la laisse comporte un moyen de fixation solide (40), tel qu'une sangle appropriée, configuré pour fixer solidement la balle dans le berceau.

13. Accessoire selon la revendication 12, dans lequel le moyen de fixation solide comporte des dispositifs de fixation à ajustement serré (42) moyennant quoi le moyen de fixation solide peut être fixé à la laisse soit pour retenir la balle dans le berceau, soit pour fixer solidement le moyen de fixation solide à l'écart lorsque la laisse est utilisée en tant qu'élingue.
